# EUROPEAN PATENT APPLICATION

(11) **EP 2 256 568 A1**
(43) Date of publication of application: **01.12.2010**
(21) Application number: 09721040.5
(22) Date of filing: 22.01.2009
(51) Int. Cl.: G05B 19/418, G06Q 50/00

(54) **OPERATION SUPPORT DEVICE, OPERATION SUPPORT METHOD, AND COMPUTER PROGRAM**

(30) Priority: 10.03.2008 JP 2008060055
(71) Applicant: Nippon Steel Corporation, Chiyoda-ku Tokyo 100-8071 (JP)
(72) Inventor: OSHITA, Isao, Tokyo 100-8071 (JP); SHIMOI, Shinichiroh, Tokyo 100-8071 (JP); HARADA, Minoru, Tokyo 100-8071 (JP); SATOU, Yukio, Tokyo 100-8071 (JP); SASAKI, Eiichi, Tokyo 104-0033 (JP)
(74) Representative: Vossius & Partner
(86) International application number: PCT/JP2009/050926
(87) International publication number: WO 2009/113328

(57) **Abstract**

An operation support apparatus includes a display device (16) displaying a setting screen including an operating instruction information setting section in which operating instruction information related to the operating instruction is set and an applicable condition setting section having a menu for setting an applicable condition when notifying the operating instruction information. A CPU (11) selects one item from display items in the menu based on an operating input by a PD (14), and performs control to change and display display items in a lower menu below the menu depending on the selected item.

## Description

### Technical Field

The present invention relates to an operation support apparatus and an operation support method for giving an operating instruction to workers in production processes on a production line to support operations on this production line, and a computer program for causing a computer to execute the operation support method.

### Background Art

Conventionally, for example, there has been proposed a system for supporting operations on a production line for workers in production processes on the production line. For example, Patent Document 1 mentioned below illustrates a support system intended for supporting input and editing operations of knowledges (rules) related to operations.

Specifically, Patent Document 1 illustrates a support system which displays an editor screen in a general tabular form for inputting knowledges (rules) related to operations using Case-Based Reasoning, and reads information inputted to a section displayed on this editor screen so as to perform editing.

Patent Document 1: Japanese Laid-open Patent Publication No. 07-271588

### Summary of the Invention

However, the system of Patent Document 1 requires that, for example, the operator (registrant) who inputs knowledges (rules) related to operating instructions is familiar with the Case-Based Reasoning, which poses a problem that the operator is limited when the knowledges (rules) related to operating instructions are inputted.

The present invention is made in view of such a problem, and has an object to make it possible to avoid limiting, when inputting knowledges (rules) related to operating instructions, the operator who performs this input.

An operation support apparatus of the present invention is for giving an operating instruction to workers in production processes on a production line to support operations on the production line. The apparatus includes a display unit displaying a setting screen including an operating instruction information setting section in which operating instruction information related to the operating instruction is set and an applicable condition setting section having a menu for setting an applicable condition when notifying the operating instruction information to the workers, a selecting unit selecting one item from display items in the menu based on an operating input, and a display control unit performing control to change and display display items in a lower menu below the menu depending on the item selected by the selecting unit.

An operation support method of the present invention is for giving an operating instruction to workers in production processes on a production line to support operations on the production line. The method includes a display step of displaying on a display unit a setting screen including an operating instruction information setting section in which operating instruction information related to the operating instruction is set and an applicable condition setting section having a menu for setting an applicable condition when notifying the operating instruction information to the workers, a selecting step of selecting one item from display items in the menu based on an operating input, and a display control step of performing control to change and display display items in a lower menu below the menu depending on the item selected in the selecting step.

A computer program of the present invention is for causing a computer to execute an operation support method for giving an operating instruction to workers in production processes on a production line to support operations on the production line. The computer program causes a computer to execute a display step of displaying on a display unit a setting screen including an operating instruction information setting section in which operating instruction information related to the operating instruction is set and an applicable condition setting section having a menu for setting an applicable condition when notifying the operating instruction information to the workers, a selecting step of selecting one item from display items in the menu based on an operating input, and a display control step of performing control to change and display display items in a lower menu below the menu depending on the item selected in the selecting steps.

### Brief Description of the Drawings

Fig. 1 is a diagram illustrating an example of a schematic structure of an operation support system including an operation support apparatus according to an embodiment of the present invention;
Fig. 2 is a diagram illustrating an example of an internal structure of the operation support system according to the embodiment of the present invention;
Fig. 3 is a flowchart illustrating an example of a processing procedure related to setting for performing notification of operating instruction information in the operation support apparatus according to the embodiment of the present invention;
Fig. 4 is a flowchart illustrating the embodiment of the present invention and illustrating an example of a detailed processing procedure of step S6 illustrated in Fig. 3;
Fig. 5A is a diagram illustrating the embodiment of the present invention and illustrating an example of a table of display items in a judging method menu;
Fig. 5B is a diagram illustrating the embodiment of the present invention and illustrating an example of a table of display items in a comparison target menu;
Fig. 6 is a diagram illustrating the embodiment of the present invention and illustrating an example of a table for deriving display items in a comparison expression 1 menu;
Fig. 7 is a diagram illustrating the embodiment of the present invention and illustrating an example of a table of display items in the comparison expression 1 menu;
Fig. 8 is a diagram illustrating the embodiment of the present invention and illustrating an example of a table of display items in a detailed condition menu;
Fig. 9 is a diagram illustrating the embodiment of the present invention and illustrating an example of a table of display items in a comparison expression 2 menu;
Fig. 10 is a schematic diagram illustrating the embodiment of the present invention and illustrating an example of an operating instruction setting screen displayed on a display device of the operation support apparatus;
Fig. 11 is a schematic diagram illustrating the embodiment of the present invention and illustrating an example of the operating instruction setting screen displayed on the display device of the operation support apparatus;
Fig. 12 is a schematic diagram illustrating the embodiment of the present invention and illustrating an example of the operating instruction setting screen displayed on the display device of the operation support apparatus;
Fig. 13 is a schematic diagram illustrating the embodiment of the present invention and illustrating an example of the operating instruction setting screen displayed on the display device of the operation support apparatus;
Fig. 14 is a schematic diagram illustrating the embodiment of the present invention and illustrating an example of the operating instruction setting screen displayed on the display device of the operation support apparatus;
Fig. 15 is a schematic diagram illustrating the embodiment of the present invention and illustrating an example of the operating instruction setting screen displayed on the display device of the operation support apparatus;
Fig. 16 is a schematic diagram illustrating the embodiment of the present invention and illustrating an example of the operating instruction setting screen displayed on the display device of the operation support apparatus;
Fig. 17 is a schematic diagram illustrating the embodiment of the present invention and illustrating an example of the operating instruction setting screen displayed on the display device of the operation support apparatus;
Fig. 18 is a schematic diagram illustrating the embodiment of the present invention and illustrating an example of the operating instruction setting screen displayed on the display device of the operation support apparatus;
Fig. 19 is a schematic diagram illustrating the embodiment of the present invention and illustrating an example of the operating instruction setting screen displayed on the display device of the operation support apparatus;
Fig. 20 is a flowchart illustrating an example of a processing procedure of notification of the operating instruction information in the operation support apparatus according to the embodiment of the present invention;
Fig. 21A is a schematic diagram illustrating the embodiment of the present invention and illustrating an example of the mode of storing (mode of saving) setting information set in an HD of the operation support apparatus; and
Fig. 21B is a schematic diagram illustrating the embodiment of the present invention and illustrating an example of the mode of storing (mode of saving) setting information set in the HD of the operation support apparatus.

### Detailed Description of the Preferred Embodiments

Hereinafter, an embodiment of the present invention will be described with reference to the drawings.

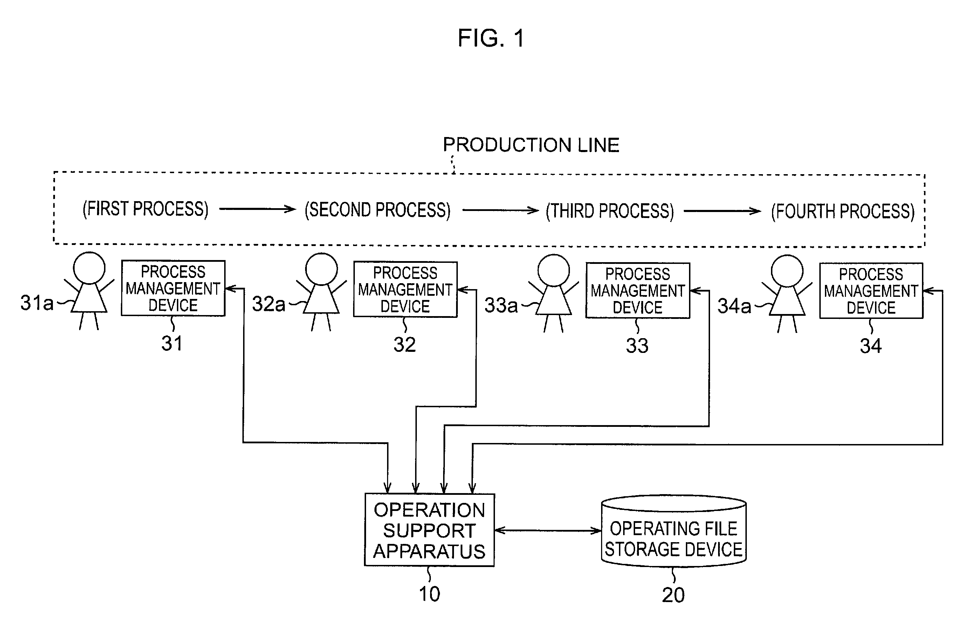

Fig. 1 is a diagram illustrating an example of a schematic structure of an operation support system including an operation support apparatus 10 according to the embodiment of the present invention.

As illustrated in Fig. 1, the operation support system is structured having the operation support apparatus 10, an operating file storage device 20, and process management devices 31 to 34. Further, the operation support apparatus 10, the operating file storage device 20, and the process management devices 31 to 34 are connected communicably via a network. Here, although Fig. 1 illustrates an example in which a production line is constituted of four production processes, a first process to a fourth process, it is also applicable when the number of processes is different.

The operation support apparatus 10 supports operations on the production line by giving operating instructions to workers 31a to 34a in the production processes (the first process to the fourth process in the example shown in Fig. 1) on the production line via the respective process management devices 31 to 34.

The operating file storage device 20 stores an operating file related to operations of the respective production processes (the first process to the fourth process in the example shown in Fig. 1) on the production line. This operating file stored in the operating file storage device 20 can be referred from the operation support apparatus 10 and the process management devices 31 to 34, and is also possible to be edited in these devices.

The process management devices 31 to 34 are provided corresponding to the respective production processes (the first process to the fourth process in the example illustrated in Fig. 1) on the production line. Then the process management devices 31 to 34 provide the workers 31a to 34a performing the respective production processes with information regarding process management or the like via display and/or sound. In this providing, the process management devices 31 to 34 provide information regarding process management or the like based on control by the operation support apparatus 10 or operating inputs by the workers 31a to 34a.

Next, the internal structure of the operation support apparatus 10 will be described.

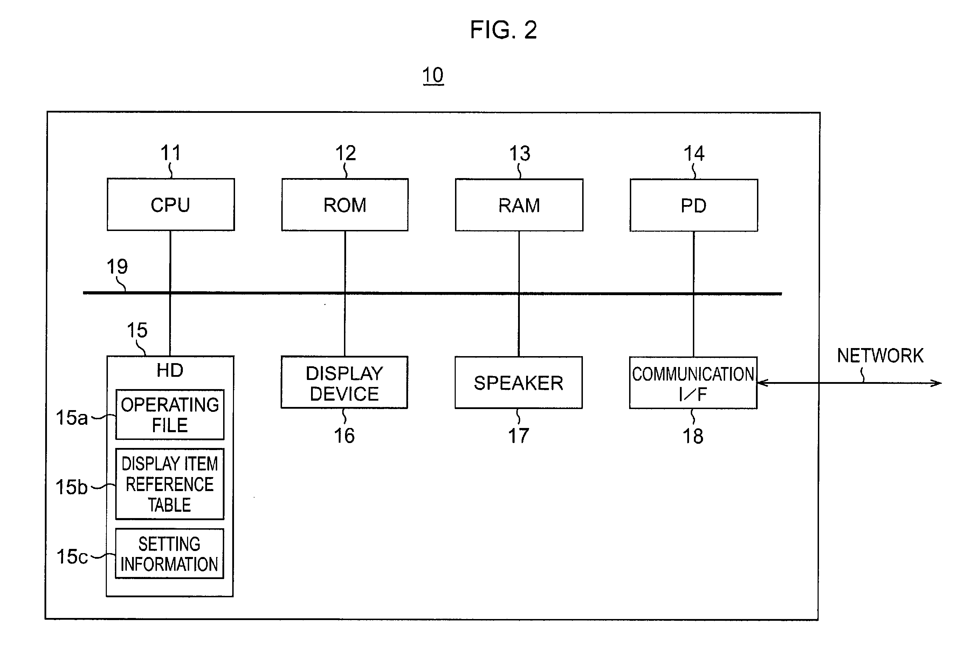

Fig. 2 is a diagram illustrating an example of an internal structure of the operation support apparatus 10 according to the embodiment of the present invention.
As illustrated in Fig. 2, the operation support apparatus 10 is structured having a CPU (Central Processing Unit) 11, a ROM (Read Only Memory) 12, a RAM (Random Access Memory) 13, a PD (Pointing Device) 14, an HD (Hard Disk) 15, a display device 16, a speaker 17, a communication I/F (Interface) 18, and a system bus 19.

The CPU 11 controls the entire operation in the operation support apparatus 10, controlling the components (12 to 18) of the operation support apparatus 10 via the system bus 19.

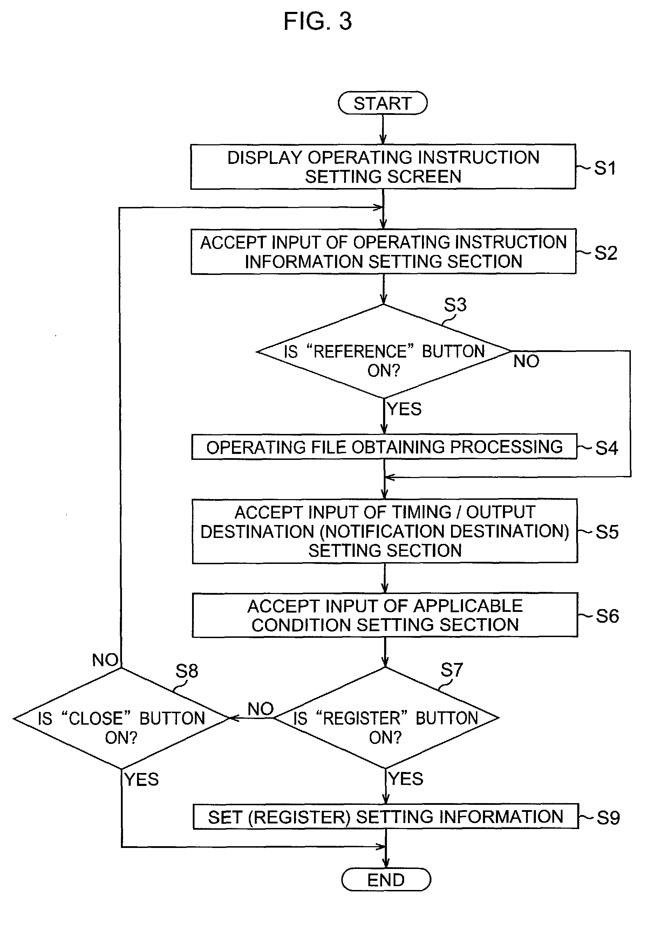

The ROM 12 stores a BIOS (Basic Input/Output System) which is a control program for the CPU 11, an operating system program (OS), programs needed by the CPU 11 to perform processing in Fig. 3, Fig. 4, and Fig. 20 which will be described later, and so on.

The RAM 13 functions as a main memory, a work area, and the like for the CPU 11. The CPU 11 loads to the RAM 13 a necessary computer program or the like from the ROM 12 and needed information or the like from the HD 15 when performing processing, and carries out various operations by performing this computer program or the like or processing this information or the like.

The PD 14 is constituted of a mouse, a keyboard, and/or the like for example, and forms an operating input unit for the operator to perform an operating input to the operation support apparatus 10 as necessary.

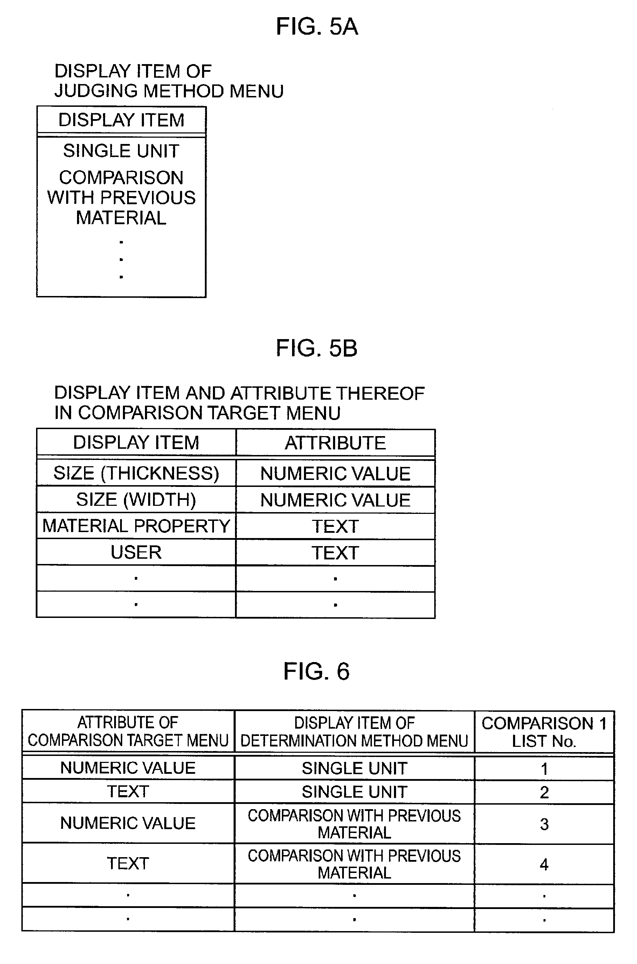

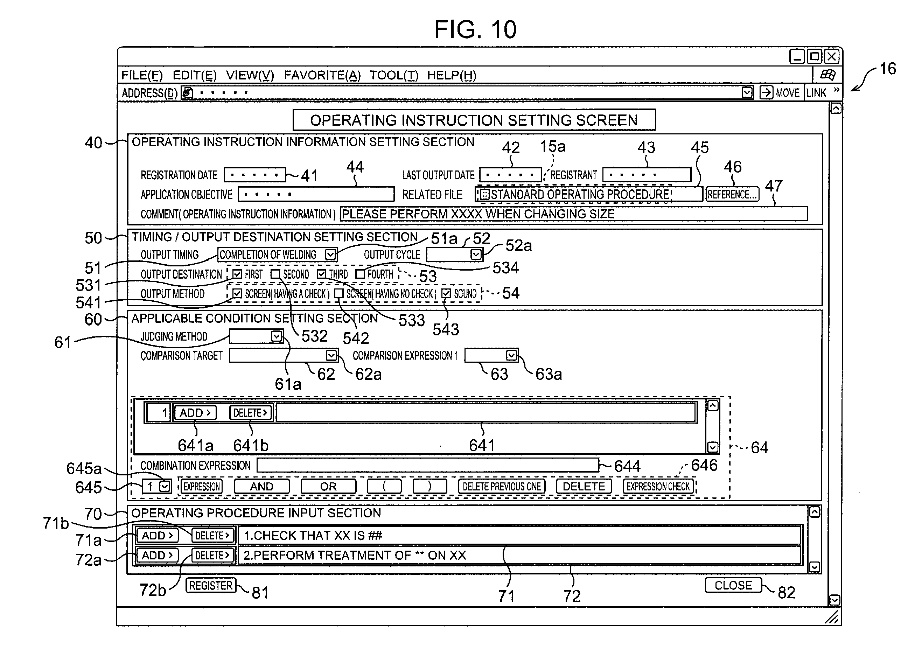

The HD 15 forms a storage unit storing various information, data, files, and so on. Particularly, in the operation support apparatus 10 according to this embodiment, the HD 15 stores an operating file 15a obtained from the operating file storage device 20 based on an operating input with the PD 14 by the operator, a display item reference table 15b which is referred when processing display of display items in each menu of an operating instruction setting screen illustrated in Fig. 10 to Fig. 19, which will be described later, and is constituted of information illustrated in Fig. 5A and Fig. 5B and Fig. 6 to Fig. 9, which will be described later, and various setting information 15c set in an operating instruction setting screen illustrated in Fig. 10 to Fig. 19, which will be described later.

The display device 16 forms a display unit displaying various information and images based on control by the CPU 11. Particularly, in the operation support apparatus 10 according to this embodiment, the display device 16 displays the operating instruction setting screen illustrated in Fig. 10 to Fig. 19, which will be described later.

The speaker 17 forms an audio output unit outputting sound related to various information based on control by the CPU 11.

The communication I/F 18 performs communication of various information and/or the like with an external device via a network based on control by the CPU 11.

The system bus 19 is a bus for connecting the CPU 11, the ROM 12, the RAM 13, the PD 14, the HD 15, the display device 16, the speaker 17, and the communication I/F 18 in a mutually communicable manner.

Further, the process management devices 31 to 34 illustrated in Fig. 1 also internally has a structure similar to the internal structure of the operation support apparatus 10 illustrated in Fig. 2. However, in the process management devices 31 to 34, it is not necessary to store the operating file 15a, the display item reference table 15b, and the setting information 15c in the HD 15 illustrated in Fig. 2.

Next, an operation support method by the operation support apparatus 10 according to this embodiment, namely, operating procedures of the operation support apparatus 10 will be described.

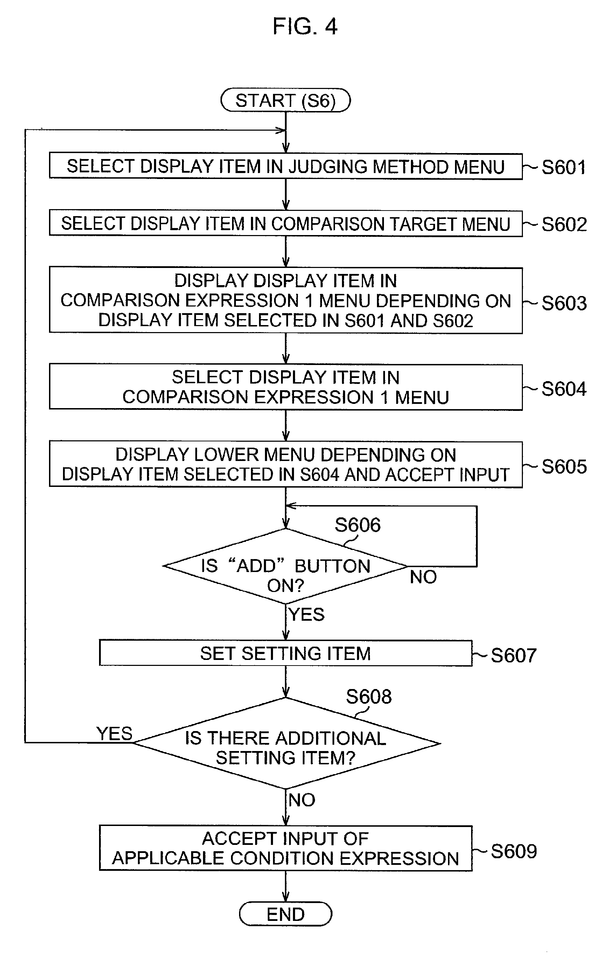

Fig. 3 is a flowchart illustrating an example of a processing procedure related to setting for performing notification of operating instruction information in the operation support apparatus 10 according to the embodiment of the present invention. Further, Fig. 4 is a flowchart illustrating an example of a detailed processing procedure of step S6 illustrated in Fig. 3. Hereinafter, descriptions of steps of the flowcharts in Fig. 3 and Fig. 4 will be given using, as necessary, the display item reference table 15b illustrated in Fig. 5A and Fig. 5B and Fig. 6 to Fig. 9 and the operating instruction setting screen illustrated in Fig. 10 to Fig. 19.

First, when an operating input to "display operating instruction setting screen" is performed via the PD 14 by the operator of the operation support apparatus 10, in step S1 of Fig. 3 the CPU 11 of the operation support apparatus 10 detects this input and performs control to display the operating instruction setting screen on the display device 16.

Fig. 10 is a schematic diagram illustrating an example of the operating instruction setting screen displayed on the display device 16 of the operation support apparatus 10. Here, Fig. 10 illustrates the case where the production line shown in Fig. 1 is, for example, a line for welding coiled steel plates (steel bands) with each other in steel industry. Hereinafter, the operating instruction setting screen illustrated in Fig. 10 will be described.

The operating instruction setting screen illustrated in Fig. 10 is provided with an operating instruction information setting section 40, a timing/output destination setting section (timing/notification destination setting section) 50, an applicable condition setting section 60, an operating procedure input section 70, a register button 81, and a close button 82.

First, the operating instruction information setting section 40 in which the operating instruction information related to operating instructions for the workers are set will be described.

In a registration date display field 41 of the operating instruction information setting section 40, the registration date of this operating instruction setting screen is displayed. Further, in a last output date display field 42 of the operating instruction information setting section 40, there is displayed a last output date of outputting operating instruction information (comment) set in an operating instruction information setting field 47 to the workers (31a to 34a) via the process management devices (31 to 34). The displays in the registration date display field 41 and the last output date display field 42 are updated appropriately by, for example, a clock function included in the OS of the computer in which the operation support apparatus 10 is mounted.

In a registrant input field 43 of the operating instruction information setting section 40, the name and so on of the registrant (operator) who performs registration on this operating instruction setting screen are inputted. In an application objective input field 44 of the operating instruction information setting section 40, the objective of applying the operating instruction information set in the operating instruction information setting field 47 is inputted. For example, an application objective such as "to prevent scratch on steel plate" is inputted in the application objective input field 44.

In a related file setting field 45 of the operating instruction information setting section 40, the operating file 15a related to an operation of each production process on the production line illustrated in Fig. 1 is set, the file being obtained from the operating file storage device 20 and placed in the HD 15 via a reference button 46. Here, Fig. 10 illustrates the file of a standard operating procedure as an example of the operating file 15a. The reference button 46 of the operating instruction information setting section 40 is a button for the operator to perform an operating input using the PD 14 when obtaining the predetermined operating file 15a from operating files stored in the operating file storage device 20.

In the operating instruction information setting field 47 of the operating instruction information setting section 40, operating instruction information (comment) related to an operating instruction given to the workers (31a to 34a) via the process management devices (31 to 34) is set.

Next, the timing/output destination setting section 50 in which the timing and the output destination (notification destination) when the operating instruction information is notified to the workers are set will be described.

In an output timing setting field (notification timing setting field) 51 of the timing/output destination setting section 50, there is set an output timing (notification timing) to output (notify) the operating instruction information set in the operating instruction information setting field 47. Setting of this output timing is performed by the operator operating an item display button 51a using the PD 14 and selecting one item from the display items displayed. Specifically, in the example illustrated in Fig. 10, "completion of welding" is set as the output timing in the output timing setting field 51.

In an output cycle setting field (notification timing setting field) 52 of the timing/output destination setting section 50, an output cycle (notification cycle) for ensuring an interval of output timing is set, by time for example, even when it is an output timing set in the output timing setting field 51. Setting of this output cycle is made possible because, for example when steel plates are treated sequentially on the production line performing welding, it is possible that the timing "completion of welding" set in the output timing setting field 51 occurs continually, and the operating instruction information is notified to the workers (31a to 34a) frequently. Setting of this output cycle is performed by the operator operating an item display button 52a using the PD 14, and selecting one item from the display items displayed. Incidentally, in this embodiment, the description will be given with the case where, as illustrated in Fig. 10, setting of the output cycle in the output cycle setting field 52 is not performed, and the operating instruction information is outputted at the output timing set in the output timing setting field 51.

In an output destination setting field (notification destination setting field) 53 of the timing/output destination setting section 50, an output destination (notification destination) to which the operating instruction information set in the operating instruction information setting field 47 is outputted (notified) is set. Specifically, a check box 531 is checked via the PD 14 when outputting the operating instruction information to the process management device 31 in the first process illustrated in Fig. 1, a check box 532 is checked via the PD 14 when outputting the operating instruction information to the process management device 32 in the second process illustrated in Fig. 1, a check box 533 is checked via the PD 14 when outputting the operating instruction information to the process management device 33 in the third process illustrated in Fig. 1, and a check box 534 is checked via the PD 14 when outputting the operating instruction information to the process management device 34 in the fourth process illustrated in Fig. 1. In this checking, the check boxes 531 to 534 are structured such that one or more of them can be checked. In the output destination setting field 53 illustrated in Fig. 10, setting for outputting the operating instruction information to the process management device 31 and the process management device 33 is made.

In an output method setting field (notification method setting field) 54 of the timing/output destination setting section 50, an output method (notification method) for outputting (notifying) the operating instruction information set in the operating instruction information setting field 47 is set. Specifically, the check box 541 is checked via the PD 14 when displaying the operating instruction information as notification on the display device 16 of the process management devices (31, 33), which are output destinations set in the output destination setting field 53, and requesting to send back information indicating that the displayed operating instruction information is checked by the worker (the workers 31a, 33a in this example). Further, the check box 542 is checked via the PD 14 when displaying the operating instruction information as notification on the display device 16 of the process management devices (31, 33) which are output destinations set in the output destination setting field 53. Further, the check box 543 is checked via the PD 14 when outputting the operating instruction information as notification via sound from the speaker 17 of the process management devices (31, 33), which are output destinations set in the output destination setting field 53. In this checking, the check boxes 541 to 544 are structured such that one or more of them can be checked. In the output method setting field 54 illustrated in Fig. 10, setting for notifying the operating instruction information via screen display and having a check by worker and setting of notification via sound are made.

Next, the applicable condition setting section 60 including a menu for setting applicable conditions when notifying the operating instruction information to the workers will be described.

In the applicable condition setting section 60, a judging method menu 61, a comparison target menu 62, and a comparison expression 1 menu 63 are provided as menus for setting applicable conditions when notifying the operating instruction information to the workers. Here, the comparison expression 1 menu 63 corresponds to a lower menu located at a lower hierarchy level of the comparison target menu 62 (and the judging method menu 61). In other words, the comparison target menu 62 (and the judging method menu 61) corresponds to a higher menu located at a higher hierarchy level than the comparison expression 1 menu 63.

Setting of the judging method with the judging method menu 61 is performed by the operator operating an item display button 61a using the PD 14 and selecting one item from the display items displayed. Similarly, setting of a comparison target with the comparison target menu 62 is performed by the operator operating an item display button 62a using the PD 14 and selecting one item from the display items displayed, and setting of a comparison expression 1 with the comparison expression 1 menu 63 is performed by the operator operating an item display button 63a using the PD 14 and selecting one item from the display items displayed.

Fig. 5A and Fig. 5B are diagrams illustrating examples of a table of display items in the judging method menu 61 and a table of display items in the comparison target menu 62. Specifically, Fig. 5A illustrates the example of a table of display items in the judging method menu 61, and Fig. 5B illustrates the example of a table of display items and attributes thereof in the comparison target menu 62.

As illustrated in Fig. 5A, "single unit", "comparison with previous material", and so on are shown as display items of the judging method menu 61. Among them, when the item of "single unit" is selected, a judgment is made on what kind of steel plate is the currently welded steel plate. Further, when the item of "comparison with previous material" is selected, a judgment is made on what kind of steel plate is the currently welded steel plate as compared to the previous steel plate. Besides them, although not specifically illustrated in Fig. 5A, for example "previous material single unit" for making a judgment on what kind of steel plate is the previous steel plate, "subsequent material single unit" for making a judgment on what kind of steel plate is the subsequent steel plate, or "subsequent material comparison" for making a judgment on what kind of steel plate is the currently welded steel plate as compared to the subsequent steel plate are applicable as display items of the judging method menu 61.

Further, as illustrated in Fig. 5B, "size (thickness) [mm]" to set thicknesses of steel plates as comparison targets, "size (width) [mm]" to set widths of steel plates as comparison targets, "material property" to set material properties of steel plates as comparison targets, "user" to set users of steel plates as comparison targets, and so on are shown as display items of the comparison target menu 62. Further, as illustrated in Fig. 5B, corresponding to these display items, a "numeric value" or a "text" is associated as attributes thereof and stored. Besides them, although not illustrated specifically in Fig. 5B, for example as ones having an attribute "numeric value", "length [m]" to set the lengths of steel plates as comparison targets, "mass [t]" to set masses of steel plates as comparison targets, or the like are applicable as display items of the comparison target menu 62. Further, for example, "paint material" to set paint materials of steel plates as comparison targets, or the like is applicable as one having an attribute "text".

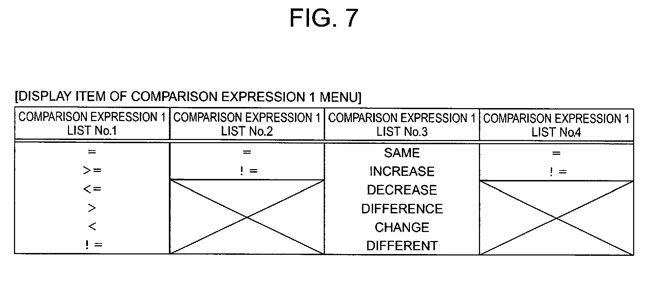

Fig. 6 is a diagram illustrating an example of a table for deriving display items in the comparison expression 1 menu 63. Further, Fig. 7 is a diagram illustrating an example of a table of display items in the comparison expression 1 menu 63.

In Fig. 6, when an item is selected from the display items of the judging method menu 61 and an item is selected from display items of the comparison target menu 62 and the attribute thereof is determined, "comparison expression 1 list No." indicating a group of display items displayed in the comparison expression 1 menu 63 is extracted. Then the group of display items corresponding to the "comparison expression 1 list No." extracted in Fig. 6 is extracted from Fig. 7, thereby determining the display items of the comparison expression 1 menu 63. Using these Fig. 6 and Fig. 7, the CPU 11 of the operation support apparatus 10 performs control to change and display display items in the comparison expression 1 menu 63 depending on the item selected in the comparison target menu 62 (and the judging method menu 61).

Moreover, in the applicable condition setting section 60, in addition to the group of menus of the judging method menu 61, the comparison target menu 62, and the comparison expression 1 menu 63, there is provided an applicable condition setting field 64 for setting applicable conditions when the operating instruction information is notified to the workers (31a to 34a) using one or more single setting items set with the group of these menus.

In the applicable condition setting field 64 illustrated in Fig. 10, a first setting item setting field 641 for setting one setting item set with the judging method menu 61, the comparison target menu 62, the comparison expression 1 menu 63, or the like is shown. Further, an add button 641a and a delete button 641b are provided corresponding to the first setting item setting field 641. The add button 641a is a button which is operated when setting one setting item set with the judging method menu 61, the comparison target menu 62, the comparison expression 1 menu 63, or the like to the first setting item setting field 641, and providing a new setting item setting field (second setting item setting field in the case of this example). Further, the delete button 641b is a button which is operated when deleting a setting item set to the first setting item setting field 641.

In a combination expression setting field 644 of the applicable condition setting field 64, there is performed setting of a combination expression (logical expression) inputted using a setting item number selecting field 645 in which the number of the setting item setting field is selected and a group of various buttons 646 for composing a combination expression (logical expression). In this setting, the number "1" selected in the setting item number selecting field 645 corresponds to the first setting item setting field 641, and setting of the number of the setting item number selecting field 645 is performed by the operator operating a number display button 645a using the PD 14 and selecting one number from the displayed numbers.

Next, the operating procedure input section 70 will be described.
The operating file 15a attached to the related file setting field 45 is targeted at one that shows the contents of operation in a relevant production process in detail, or the like, whereas this operating procedure input section 70 is targeted at showing an operating procedure in this production process by itemizing.

In a first operating procedure inputting field 71 of the operating procedure input section 70, a first operation in this production process is inputted. Further, an add button 71a and a delete button 71b are provided corresponding to the first operating procedure inputting field 71. The add button 71a is a button operated when setting the first operation to the first operating procedure inputting field 71 and providing a new operating procedure input field (in this example, a second operating procedure inputting field 72). Further, the delete button 71b is a button operated when deleting the first operation set in the first operating procedure inputting field 71. In the operating procedure input section 70 of Fig. 10, moreover, a second operating procedure inputting field 72 and an add button 72a and a delete button 72b corresponding thereto are provided.

Next, the register button 81 and the close button 82 will be described.
The register button 81 is a button operated when setting the contents set in the operating instruction setting screen and registering (storing) these information in the HD 15 as the setting information 15c. The close button 82 is a button operated when closing the operating instruction setting screen, that is, erasing the operating instruction setting screen from the display device 16. When this happens, if the close button 82 is operated without operating the register button 81, the information set in the operating instruction setting screen is erased without being stored in the HD 15.

Next, the description returns again to the flowchart in Fig. 3.
Note that for the processing of step S2 and thereafter in Fig. 3, there will be described the case where the operator performs input processing in the operating instruction setting screen sequentially in the order of the operating instruction information setting section 40 (including the operating procedure input section 70 as necessary), the timing/output destination setting section 50, and the applicable condition setting section 60.

When the operating instruction setting screen is displayed on the display device 16 in step S1, then in step S2 the CPU 11 of the operation support apparatus 10 first accepts an input of the operating instruction information setting section 40 of this operating instruction setting screen.

In this input, the operator uses the PD 14 to input the name of a registrant (operator) in the registrant input field 43 illustrated in Fig. 10, the application objective for applying operating instruction information (comment) in the application objective input field 44, and the operating instruction information (comment) related to an operating instruction to be given to the workers (31a to 34a) in the operating instruction information setting field 47. Specifically, Fig. 10 illustrates an example in which information "please perform XXXX when changing size" is set as the operating instruction information in the operating instruction information setting field 47.

Thereafter, the CPU 11 of the operation support apparatus 10 accepts the input of the operating procedure input section 70, and the operator inputs the operating procedure in this production process using the PD 14 as necessary.

Subsequently, in step S3, the CPU 11 of the operation support apparatus 10 determines whether the reference button 46 of the operating instruction information setting section 40 is operated and turned on or not. When the reference button 46 is turned on as a result of this determination, the processing proceeds to step S4.

Having proceeded to step S4, the CPU 11 of the operation support apparatus 10 performs processing to obtain the predetermined operating file 15a specified via the PD 14 from the operating files stored in the operating file storage device 20 and place it in the HD 15. The CPU 11 performing this processing of step S4 forms an obtaining processing unit obtaining an operating file. Then the CPU 11 of the operation support apparatus 10 sets the obtained operating file 15a to the related file setting field 45.

When the processing of step S4 is finished or when it is determined that the reference button 46 is not turned on in step S3, the processing proceeds to step S5.

Having proceeded to step S5, the CPU 11 of the operation support apparatus 10 accepts an input of the timing/output destination setting section (timing/notification destination setting section) 50 of the operating instruction setting screen.

In this input, the operator uses the PD 14 to input the output timing (notification timing) to output (notify) the operating instruction information in the output timing setting field (notification timing setting field) 51 illustrated in Fig. 10, and further input the output cycle (notification cycle) in the output cycle setting field (notification timing setting field) 52 as necessary. Here, in this embodiment, as illustrated in Fig. 10, setting of the output cycle with the output cycle setting field 52 is not performed, and the operating instruction information is outputted at the output timing set in the output timing setting field 51.

Moreover, the operator uses the PD 14 to input the output destination (notification destination) to which the operating instruction information is outputted (notified) in the output destination setting field (notification destination setting field) 53, and input the output method (notification method) for outputting (notifying) the operating instruction information in the output method setting field (notification method setting field) 54. Specifically, Fig. 10 illustrates an example in which the process management device 31 and the process management device 33 are set as output destinations (notification destinations) in the output destination setting field (notification destination setting field) 53. Further, there is illustrated an example in which setting for notification via screen display and having a check by worker and setting of notification via sound are made as the output method (notification method) in the output method setting field (notification method setting field) 54.

Subsequently, in step S6, the CPU 11 of the operation support apparatus 10 accepts an input of the applicable condition setting section 60 of the operating instruction setting screen.

Here, a detailed processing procedure in step S6 will be described using Fig. 4.

When processing of step S6 of Fig. 3 is started, first in step S601 of Fig. S601, the CPU 11 of the operation support apparatus 10 performs processing to select one item from the display items in the judging method menu 61. The CPU 11 performing this processing of step S601 forms a selecting unit selecting an item.

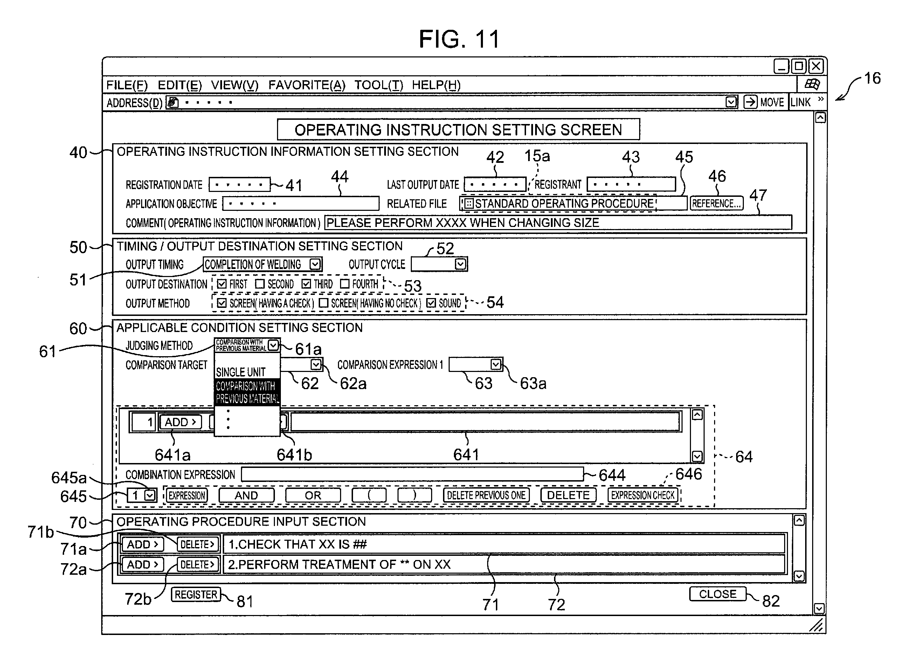

More specifically, in step S601, when the item display button 61a is operated via the PD 14, the CPU 11 of the operation support apparatus 10 first detects this operation and extracts the display items in the judging method menu 61 illustrated in Fig. 5A stored in the HD 15 as the display item reference table 15b. Then as illustrated in Fig. 11, the CPU 11 of the operation support apparatus 10 performs processing to display in the judging method menu 61 the extracted display items in the judging method menu 61. Moreover, when an instruction to select one item from the display items displayed in the judging method menu 61 is given via the PD 14, the CPU 11 of the operation support apparatus 10 detects this instruction and performs processing to select the item for which the selection instruction is given. Specifically, Fig. 11 illustrates the case where the item "comparison with previous material" is selected from the display items in the judging method menu 61.

Subsequently, in step S602, the CPU 11 of the operation support apparatus 10 performs processing to select one item from the display items in the comparison target menu 62. The CPU 11 performing this processing of step S602 forms a selecting unit selecting an item.

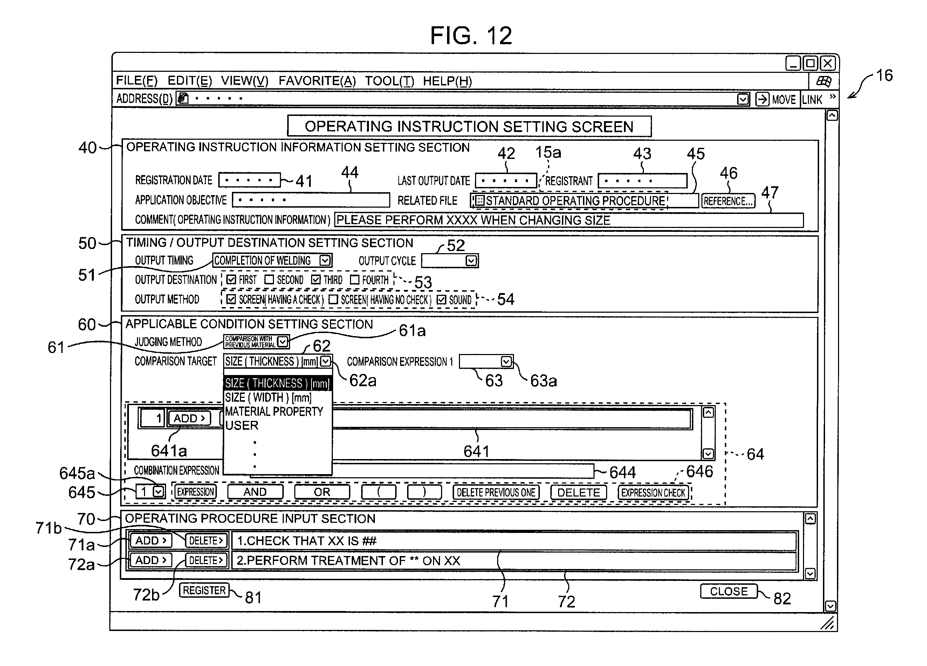

More specifically, in step S602, when the item display button 62a is operated via the PD 14, first the CPU 11 of the operation support apparatus 10 detects this operation and extracts the display items and attributes thereof in the comparison target menu 62 illustrated in Fig. 5B stored in the HD 15 as the display item reference table 15b. Then as illustrated in Fig. 12, the CPU 11 of the operation support apparatus 10 performs processing to display in the comparison target menu 62 the extracted display items in the comparison target menu 62. Moreover, when an instruction of selecting one item from the display items displayed in the comparison target menu 62 is given via the PD 14, the CPU 11 of the operation support apparatus 10 detects this instruction and performs processing to select the item for which the selecting instruction is given. Specifically, Fig. 12 illustrates the case where the item "size (thickness) [mm]" is selected from the display items in the comparison target menu 62.

Subsequently, in step S603, the CPU 11 of the operation support apparatus 10 performs control to display the display items in the comparison expression 1 menu 63 as the lower menu thereof depending on the display item in the judging method menu 61 selected in step S601 and the display item in the comparison target menu 62 selected in step S601. The CPU 11 performing this processing of step S603 forms a display control unit.

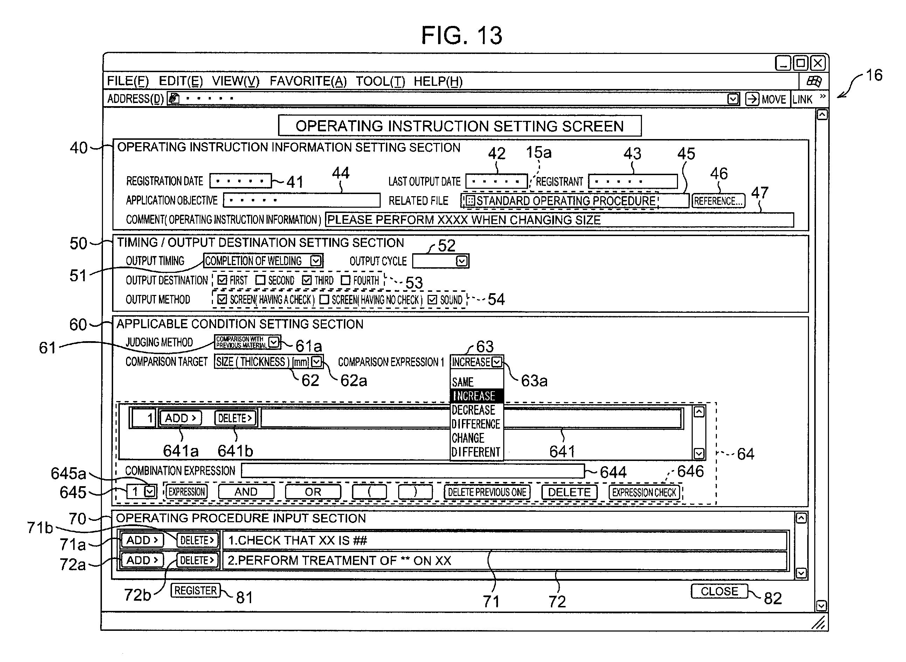

More specifically, in step S603, when the item display button 63a is operated via the PD 14, the CPU 11 of the operation support apparatus 10 first detects this operation and extracts the relevant "comparison expression 1 list No." from the table illustrate in Fig. 6 stored in the HD 15 as the display item reference table 15b. Specifically, in this example, since the "comparison with previous material" is selected from the display items of the judging method menu 61 in step S601, and the "size (thickness) [mm]" having an attribute "numeric value" is selected from the display items of the comparison target menu 62 in step S602, a comparison expression 1 list No. 3 is extracted. Then the CPU 11 of the operation support apparatus 10 extracts the group of display items corresponding to the extracted comparison expression 1 list No. 3 from groups of display items in the comparison expression 1 menu 63 illustrated in Fig. 7 stored in the HD 15 as the display item reference table 15b. Then as illustrated in Fig. 13, the CPU 11 of the operation support apparatus 10 performs processing to display in the comparison expression 1 menu 63 the display items in the comparison expression 1 menu 63 extracted from Fig. 7.

Subsequently, in step S604, when an instruction to select one item from the display items displayed in the comparison expression 1 menu 63 is given via the PD 14, the CPU 11 of the operation support apparatus 10 detects this instruction and performs processing to select the item for which the selection instruction is given. The CPU 11 performing this processing of step S6 forms the selecting unit selecting an item. Specifically, Fig. 13 illustrates the case where an item "increase" is selected from the display items in the comparison expression 1 menu 63.

Subsequently, in step S605, the CPU 11 of the operation support apparatus 10 displays a detailed condition menu corresponding to the lower menu of the comparison expression 1 menu 63 and accepts an input thereof, depending on the display item in the comparison expression 1 menu 63 which is selected in step S604.

Details of this step S605 will be described below.

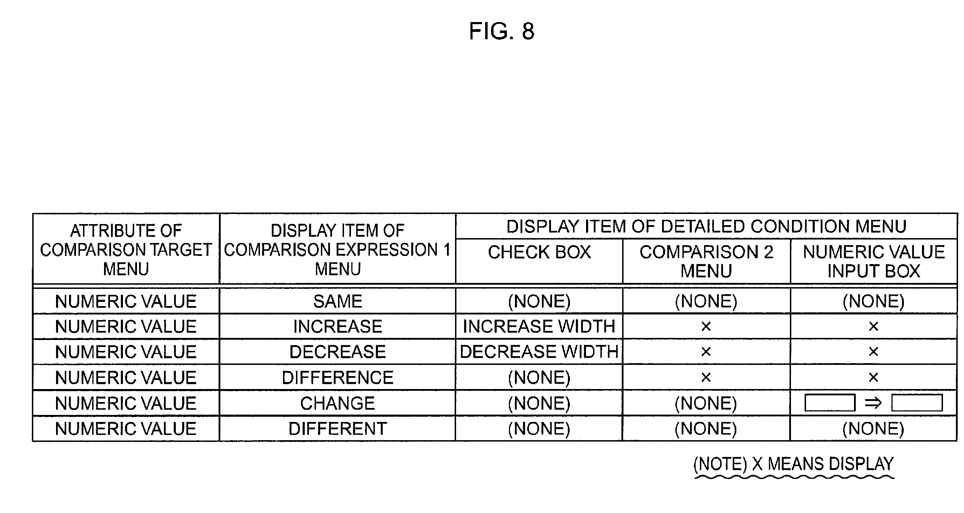

Fig. 8 is a diagram illustrating an example of a table of display items in the detailed condition menu. In this example illustrated in Fig. 8, there is shown a table of display items for when the attribute of the display item in the comparison target menu 62 selected in step S602 is "numeric value" and the comparison expression 1 list No. 3 is extracted in step S603. Further, this table illustrated in Fig. 8 is stored in the HD 15 as the display item reference table 15b.

When the item having an attribute "numeric value" is selected from the display items of the comparison target menu 62, and an item is selected from the display items of the comparison expression 1 menu 63, the CPU 11 of the operation support apparatus 10 extracts the display item in the relevant detailed condition menu based on the table illustrated in Fig. 8. Here, in this example, since the item "increase" is selected from the display items of the comparison expression 1 menu 63, display items of a check box of increase width, a comparison expression 2 menu, and a numeric value input box are extracted as the detailed condition menu as illustrated in Fig. 8.

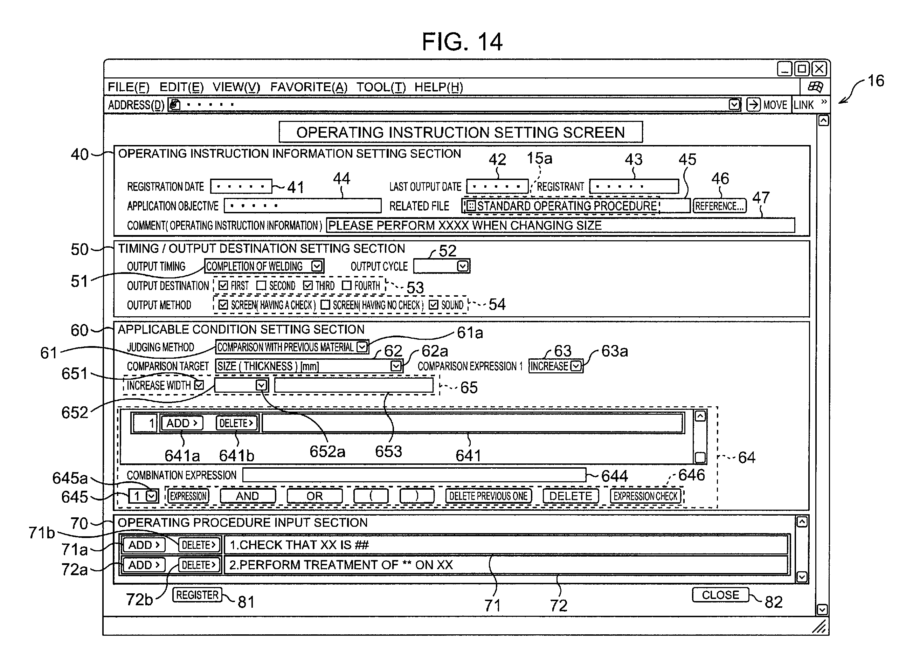

Then as illustrated in Fig. 14, the CPU 11 of the operation support apparatus 10 performs control to display the display items in the detailed condition menu extracted from Fig. 8 as a detailed condition menu 65 in the operating instruction setting screen of the display device 16. The CPU 11 performing this processing of step S605 forms a display control unit. Specifically, in this example, as illustrated in Fig. 14, the CPU 11 of the operation support apparatus 10 performs control to display display items of a check box 651 of increase width, a comparison expression 2 menu 652, and a numeric value input box 653 as the detailed condition menu 65.

Incidentally, as illustrated in Fig. 8, when an item "same" or "different" is selected from the display items of the comparison expression 1 menu 63, the display items of the detailed condition menu are not extracted, and the detailed condition menu is not displayed on the operating instruction setting screen of the display device 16. Further, as illustrated in Fig. 8, when an item "difference" is selected from the display items of the comparison expression 1 menu 63, the display items of the comparison expression 2 menu and the numeric value input box are extracted as the detailed condition menu and displayed on the operating instruction setting screen of the display device 16. Further, as illustrated in Fig. 8, when an item "change" is selected from the display items of the comparison expression 1 menu 63, display items of two numeric value input boxes for setting to change from a first value to a second value are extracted as the detailed condition menu, and are displayed on the operating instruction setting screen of the display device 16.

Incidentally, for example, when the attribute of the display item of the comparison target menu 62 selected in step S602 is "numeric value" and the comparison expression 1 list No. 1 illustrated in Fig. 7 is extracted in step S603, only the numeric value input box is displayed as a display item of the detailed condition menu on the operating instruction setting screen of the display device 16 in step S605. Further, in step S605, when the attribute of the display item of the comparison target menu 62 selected in step S602 is "text", the text input box is displayed as necessary as a display item of the detailed condition menu on the operating instruction setting screen of the display device 16.

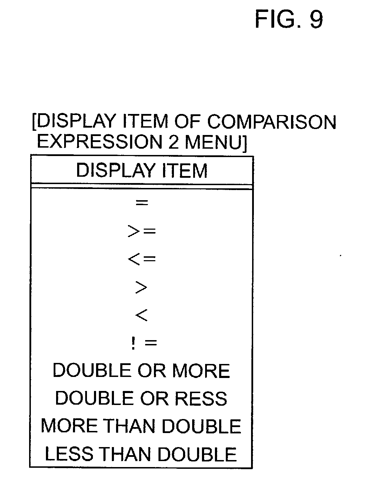

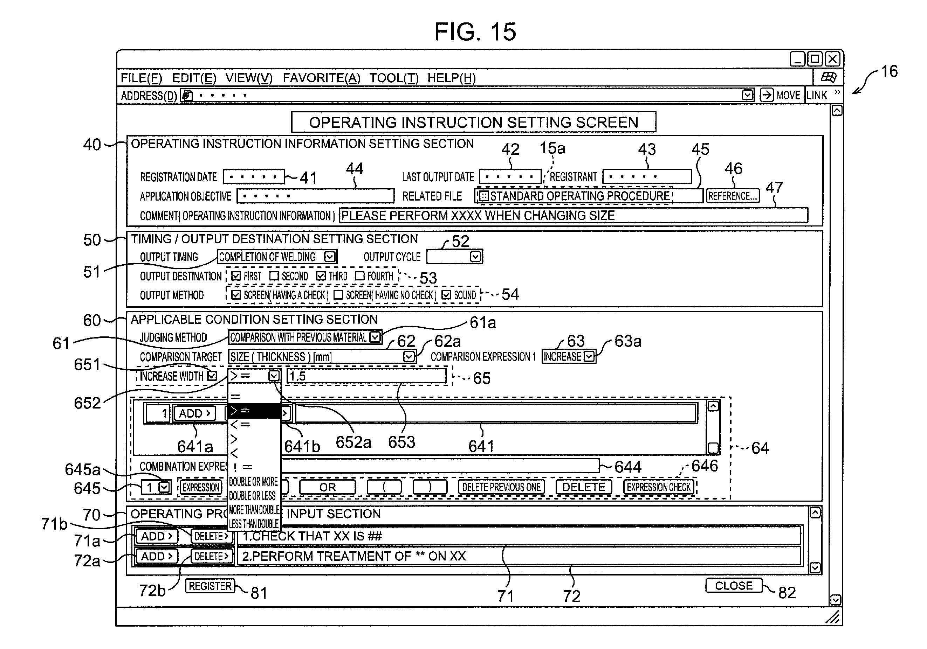

When the check box 651 of the increase width is checked via the PD 14 as illustrated in Fig. 15 from the operating instruction setting screen in which the detailed condition menu 65 illustrated in Fig. 14 is displayed and the item display button 652a is operated, the CPU 11 of the operation support apparatus 10 detects this operation and extracts display items in the comparison expression 2 menu 652 illustrated in Fig. 9 which are stored in the HD 15 as the display item reference table 15b. Then as illustrated in Fig. 15, the CPU 11 of the operation support apparatus 10 performs processing to display on the comparison expression 2 menu 652 the extracted display items in the comparison expression 2 menu 652. Here, also when an item "decrease" is selected from the display items of the comparison expression 1 menu 63 in step S604, the display items in the comparison expression 2 menu 652 illustrated in Fig. 9 are extracted and displayed.

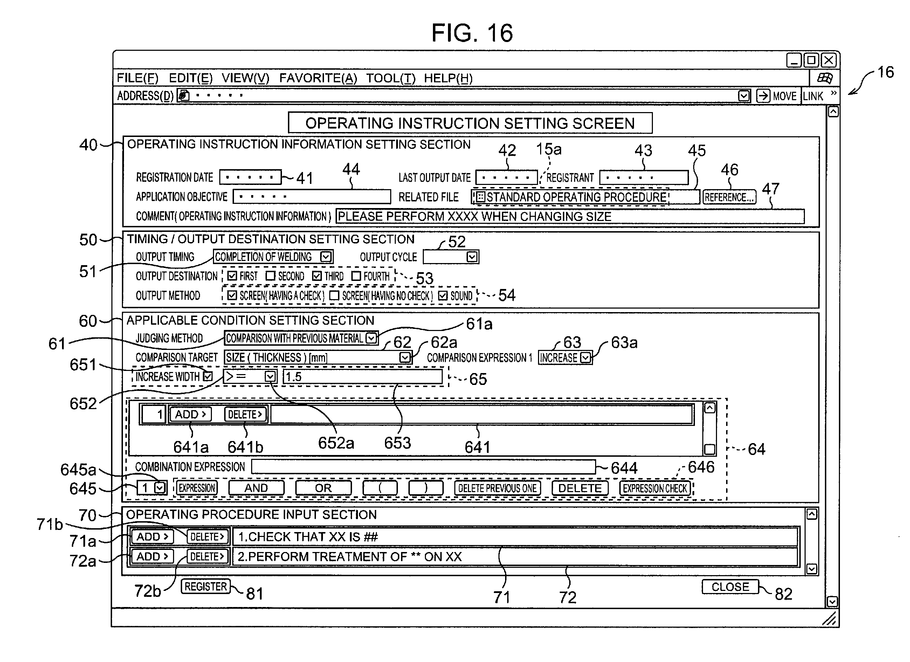

Furthermore, in the operating instruction setting screen illustrated in Fig. 15, when an instruction to select one item (">=") from the display items in the comparison expression 2 menu 652 is given via the PD 14, the CPU 11 of the operation support apparatus 10 performs processing to select the item for which the selection instruction is given. Moreover, in the operating instruction setting screen illustrated in Fig. 16, "1.5" is inputted in the numeric value input box 653 via the PD 14.

Incidentally, if the item "increase" is selected from the display items of the comparison expression 1 menu 63, when just setting is made to only increase the size (thickness) relative to the previous material the check box 651 of increase width is not checked and inputs to the comparison expression 2 menu and the numeric value input box are not performed.

Next, the description returns again to the flowchart in Fig. 4.
When the processing of step S605 in Fig. 4 is finished and it is in the state of the operating instruction setting screen illustrated in Fig. 16, subsequently in step S606 the CPU 11 of the operation support apparatus 10 determines whether the add button 641a is operated and turned on or not. As a result of this determination, when the add button 641a is not on, the processing waits until the add button 641a is operated and turned on in step S606.

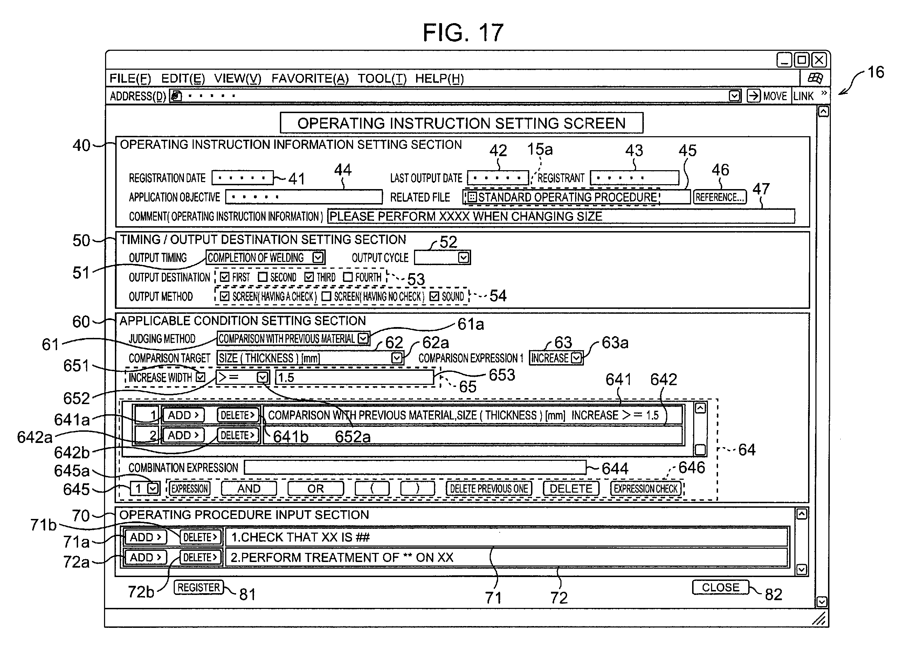

On the other hand, as a result of the determination in step S606, when the add button 641a is turned on, the processing proceeds to step S607. Having proceeded to step S607, the CPU 11 of the operation support apparatus 10 in this example sets one setting item ("comparison with previous material, size (thickness) [mm] increase >= 1.5") set with the judging method menu 61, the comparison target menu 62, the comparison expression 1 menu 63, and the detailed condition menu 65 to the first setting item setting field 641, as illustrated in Fig. 17. Incidentally, in the example illustrated in Fig. 17, the add button 641a corresponding to the first setting item setting field 641 is operated, and thus a second setting item setting field 642 and an add button 642a and a delete button 642b corresponding thereto are newly set.

Subsequently, in step S608, the CPU 11 of the operation support apparatus 10 determines whether there is an additional setting item or not. Here, the determination of whether there is an additional setting item or not is performed again by whether the item display button 61a or the like in the judging method menu 61 is operated or not.

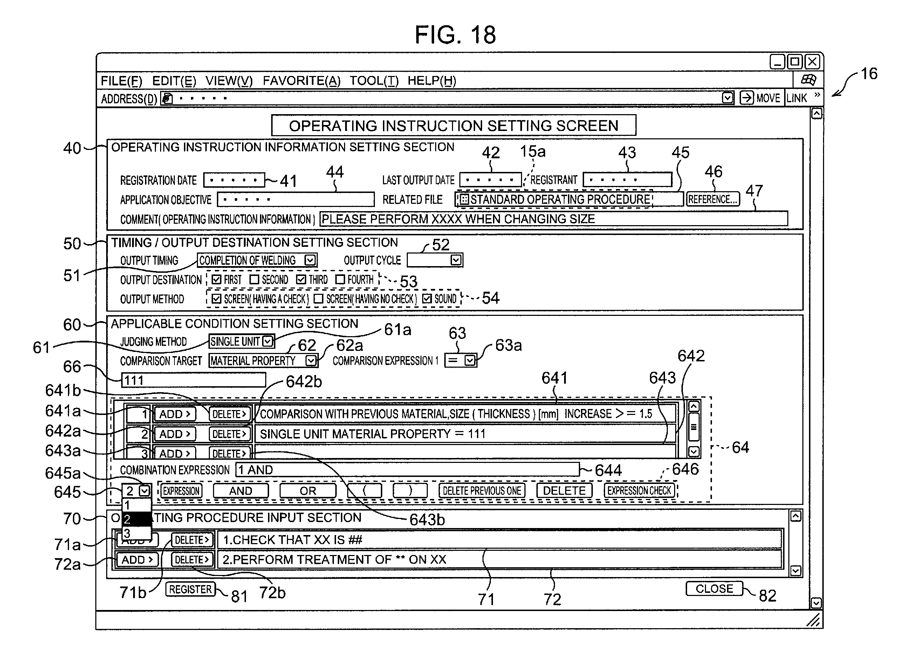

As a result of the determination in step S608, when there is an additional setting item, the processing returns again to step S601. In this example, as illustrated in Fig. 18, the item display button 61a or the like in the judging method menu 61 is operated, and thus the processing returns to step S601.

In the example illustrated in Fig. 18, when the item display button 61a is operated via the PD 14 in step S601, the CPU 11 of the operation support apparatus 10 displays the display item in the judging method menu 61 illustrated in Fig. 5A, and when an instruction to select one item is further given via the PD 14, the CPU further performs processing to select the item for which the selection instruction is given ("single unit" in this example).

Subsequently, in the example illustrated in Fig. 18, when the item display button 62a is operated via the PD 14 in step S602, the CPU 11 of the operation support apparatus 10 displays the display items in the comparison target menu 62 illustrated in Fig. 5B, and when an instruction to select one item via the PD 14 is further given via the PD 14, the CPU performs processing to select the item for which the selection instruction is given ("material property" in this example).

Subsequently, in the example illustrated in Fig. 18, in step S603, the CPU 11 of the operation support apparatus 10 performs control to display the display items in the comparison expression 1 menu 63 as a lower menu thereof depending on the display item in the judging method menu 61 selected in step S601 ("single unit" in this example) and the display item in the comparison target menu 62 selected in step S601 ("material property" in this example).

More specifically, in this step S603, when the item display button 63a is operated via the PD 14, the CPU 11 of the operation support apparatus 10 first extracts the relevant "comparison expression list No." from the table illustrated in Fig. 6. Specifically, in this example, since the "single unit" is selected from the display items of the judging method menu 61 in step S601, and the "material property" having an attribute "text" is selected from the display items of the comparison target menu 62 in step S602, the comparison expression 1 list No. 2 is extracted. The CPU 11 of the operation support apparatus 10 then extracts the group of display items corresponding to the extracted comparison expression 1 list Nip. 2 from the groups of display items in the comparison expression 1 menu 63 illustrated in Fig. 7, and performs processing to display the group on the comparison expression 1 menu 63. Here, "!=" which is one of the display items of the comparison expression 1 list No. 2 illustrated in Fig. 7 means "not equal".

Subsequently, in the example illustrated in Fig. 18, when an instruction to select one item from the display items displayed on the comparison expression 1 menu 63 illustrated is given via the PD 14 in step S604, the CPU 11 of the operation support apparatus 10 performs processing to select the item for which the selection instruction is given ("=" in this example).

Subsequently, in the example illustrated in Fig. 18, in step S605, the CPU 11 of the operation support apparatus 10 displays a detailed condition menu 66 corresponding to the lower menu of the comparison expression 1 menu 63 and accepts an input thereof, depending on the display item in the comparison expression 1 menu 63 which is selected in step S604. In this example, since the attribute of the display item ("material property") of the comparison target menu 62 selected in step S602 is "text", the text input box is displayed on the operating instruction setting screen of the display device 16 as a display item of the detailed condition menu 66. Then, in the example illustrated in Fig. 18, a text "111" representing a material property is inputted in the text input box of the detailed condition menu 66 via the PD 14.

Subsequently, in the example illustrated in Fig. 18, in step S606 the CPU 11 of the operation support apparatus 10 determines whether the add button 642a is operated and turned on or not. As a result of this determination, when the add button 642a is not on, the processing waits until the add button 642a is operated and turned on in step S606.

On the other hand, as a result of the determination in step S606, when the add button 642a is turned on, the processing proceeds to step S607. Having proceeded to step S607, the CPU 11 of the operation support apparatus 10 in the example illustrated in Fig. 18 sets one setting item ("single material, material property = 111") to the second setting item setting field 642 set with the judging method menu 61, the comparison target menu 62, the comparison expression 1 menu 63, and the detailed condition menu 66. Incidentally, in the example illustrated in Fig. 18, the add button 642a corresponding to the second setting item setting field 642 is operated, and thus a third setting item setting field 643 and an add button 643a and a delete button 643b corresponding thereto are newly set.

Subsequently, in step S608, the CPU 11 of the operation support apparatus 10 determines whether there is an additional setting item or not. Here, the determination of whether there is an additional setting item in this step S608 is performed again by, as described above, whether the item display button 61a or the like in the judging method menu 61 is operated or not.

As a result of the determination in step S608, when there is an additional setting item, the processing returns again to step S601. On the other hand, in the example illustrated in Fig. 18, after setting of the setting item in the second setting item setting field 642 is finished, the item display button 61a or the like in the judging method menu 61 is not operated, and the number display button 645a of the setting item number selecting field 645 is operated. Thus, it is determined in step S608 that there is no additional setting item and the processing proceeds to step S609.

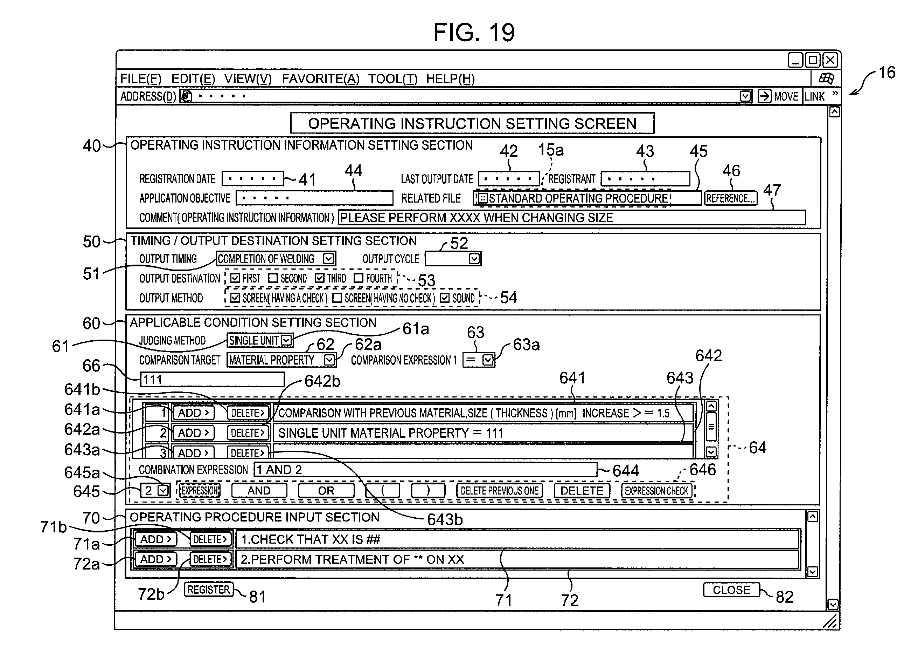

Having proceeded to step S609, the CPU 11 of the operation support apparatus 10 accepts an input of combination expression (applicable condition expression) to the combination expression setting field 644 by operating inputs of the number display button 645a and the button group 646 via the PD 14 as illustrated in Fig. 18 and Fig. 19. Specifically, in the example illustrated in Fig. 18 and Fig. 19, "1 and 2" is set in the combination expression setting field 644, and the operating instruction information is outputted (notified) when the setting item set in the first setting item setting field 641 and the setting item set in the second setting item setting field 642 are satisfied.

The processing of step S6 illustrated in Fig. 3 is performed by carrying out the processing of above-described step S601 to step S609.

Next, the description returns again to the flowchart in Fig. 3.
When the processing of step S6 is finished, subsequently in step S7 the CPU 11 of the operation support apparatus 10 determines whether the register button 81 is operated and turned on or not. As a result of this determination, when the register button 81 is not turned on, the processing proceeds to step S8.

Having proceeded to step S8, the CPU 11 of the operation support apparatus 10 determines whether the close button 82 is operated and turned on or not. As a result of this determination, when the close button 82 is not turned on, the processing returns to step S2, and accepts an input to the operating instruction setting screen again.

Further, as a result of the determination in step S7, when the register button 81 is turned on, the processing proceeds to step S9. Having proceeded to step S9, the CPU 11 of the operation support apparatus 10 records and sets (registers) the information set and inputted in the operating instruction setting screen as the setting information 15c in the HD 15.

Specifically, in step S9, the CPU 11 of the operation support apparatus 10 sets the information set and inputted in the operating instruction information setting field 47 as the operating instruction information, sets the information set and inputted in the timing/output destination setting section (timing/notification destination setting section) 50 as an output timing (notification timing), output destination (notification destination), and an output method (notification method), and sets information related to setting contents set and inputted in the applicable condition setting section 60 as the applicable condition when outputting (notifying) the operating instruction information. The CPU 11 performing this processing of step S9 forms a setting unit.

Now, the mode of storing (mode of saving) the setting information 15c set in the HD 15 in step S9 will be described.

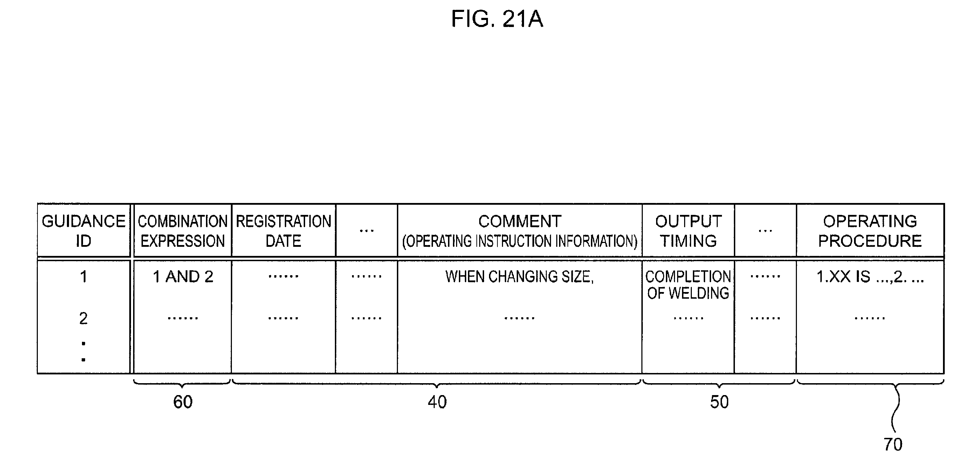

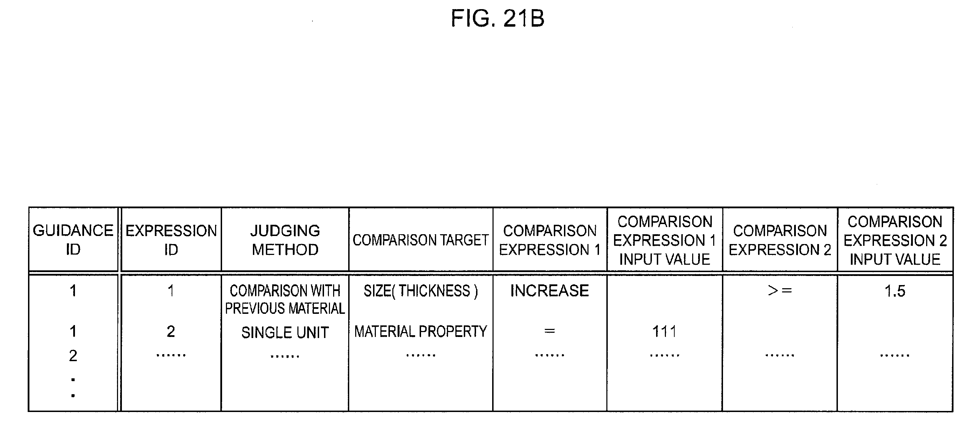

Fig. 21A and Fig. 21B are schematic diagrams illustrating an example of the mode of storing (mode of saving) the setting information 15c set in the HD 15 of the operation support apparatus 10 illustrated in Fig. 2. This example illustrated in Fig. 21A and Fig. 21B shows the setting information 15c set in the operating instruction setting screens illustrated in Fig. 10 to Fig. 19. Here, the HD 15 storing the setting information 15c forms a setting information storage unit.

Specifically, Fig. 21A illustrates information stored as general information of the setting information 15c. In this example illustrated in Fig. 21A, regarding information set in the applicable condition setting section 60 among the setting information 15c set in the operating instruction setting screen, only the information of combination expression set in the combination expression setting field 644 is stored as the general information of the setting information 15c. Further, in the example illustrated in Fig. 21A, the entire information is stored as the general information of the setting information 15c regarding the information set in the operating instruction information setting section 40, the timing/output destination setting section 50, and the operating procedure input section 70.

In Fig. 21A, a guidance ID is an identifier which is added every time the register button 81 is operated and turned on (that is, to every piece of setting information). In the example illustrated in Fig. 21A, the information set in the operating instruction setting screens illustrated in Fig. 10 to Fig. 19 is stored as information with a guidance ID of 1.

Fig. 21B illustrates information stored as detailed applicable condition information of the setting information 15c. In this example illustrated in Fig. 21B, among the information set in the applicable condition setting section 60 of the setting information 15c set in the operating instruction setting screen, the information other than the information of combination expression set in the combination expression setting field 644 is stored as the detailed applicable condition information of the setting information 15c.

In Fig. 21B, the guidance ID is an identifier which is added every time the register button 81 is operated and turned on (that is, to every piece of setting information) similarly to Fig. 21A, and the general information illustrated in Fig. 21A and the detailed applicable condition information illustrated in Fig. 21B are associated via this guidance ID.

In Fig. 21B, the expression ID is an identifier corresponding to one of combination expressions illustrated in Fig. 21A. Here, the expression ID of 1 indicates information corresponding to 1 expression of the combination expression illustrated in Fig. 21A, and specifically indicates information set in the first setting item setting field 641 of Fig. 19. Further, the expression ID of 2 indicates information corresponding to 2 expression of the combination expression illustrated in Fig. 21A, and specifically indicates information set in the second setting item setting field 642 of Fig. 19.

In this example, as illustrated in Fig. 21A and Fig. 21B, the setting information 15c is stored and set in the HD 15 in step S9.

Note that in this example, although the judging method, the comparison target, the comparison expression 1, and the comparison expression 2 are shown as text information in the detailed applicable condition information illustrated in Fig. 21B, this embodiment is not limited to this mode. For example, a mode in which information coded with numeric values is stored for each item of the judging method, the comparison target, the comparison expression 1, and the comparison expression 2 is also applicable. Further, in this example, the setting information 15c is divided into the general information (Fig. 21A) and the detailed applicable condition information (Fig 21B) and they are stored in an associated manner, but it may be a mode in which, for example, the setting information 15c is stored as one piece of information without dividing.

When the processing of step S9 is finished or the close button 82 is operated and turned on in step S8, the processing of the flowchart illustrated in Fig. 3 is finished. Incidentally, when it is determined that the close button 82 is turned on in step S8, that is, the close button 82 is operated without operating the register button 81, the information set in the operating instruction setting screen is deleted without being stored in the HD 15.

Next, processing of notification of the operating instruction information when the applicable condition set in the applicable condition setting section 60 is satisfied will be described.

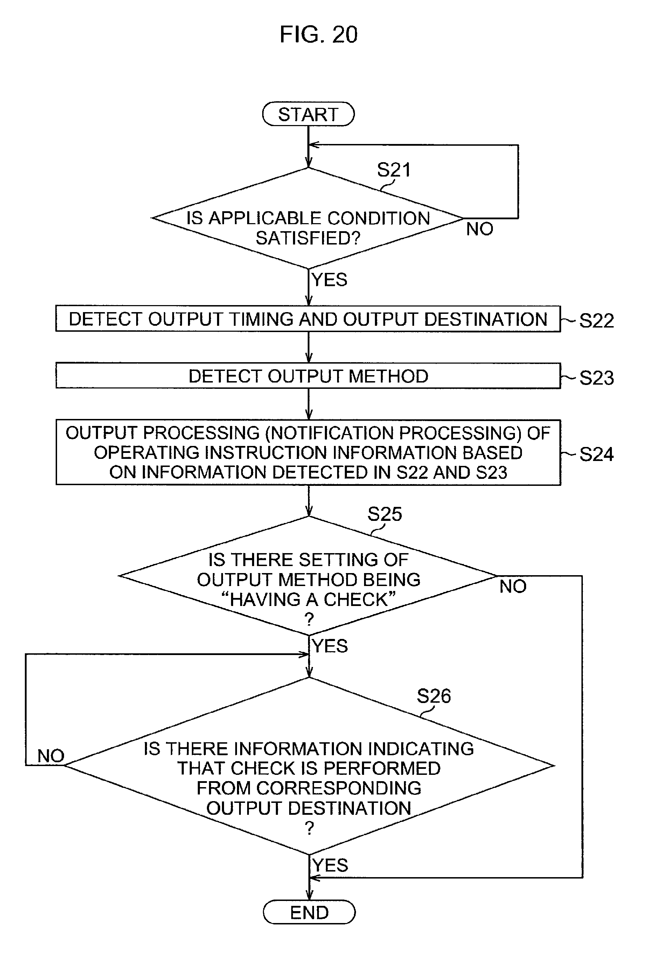

Fig. 20 is a flowchart illustrating an example of a processing procedure of notification of the operating instruction information in the operation support apparatus 10 according to the embodiment of the present invention. Incidentally, the description of the example below will be given with an example in which setting is made in the state of the operating instruction setting screen illustrated in Fig. 19 in step S9 of Fig. 3.

First, in step S21, the CPU 11 of the operation support apparatus 10 detects the information of the applicable condition set in the applicable condition setting section 60 of the operating instruction setting screen from the setting information 15c stored in the HD 15, and determines whether this applicable condition set in the applicable condition setting section 60 is satisfied or not in the production line illustrated in Fig. 1. Specifically, in this example, it is determined whether the applicable condition "setting item 1 and setting item 2" set in the applicable condition setting field 64 of the operating instruction setting screen of Fig. 19 is satisfied or not in the production line illustrated in Fig. 1. As a result of this determination, when the applicable condition set in the applicable condition setting section 60 of the operating instruction setting screen is not satisfied, the processing waits in step S21 until it is judged that the applicable condition is satisfied.

On the other hand, as a result of the determination in step S21, when the applicable condition set in the applicable condition setting section 60 of the operating instruction setting screen is satisfied, the processing proceeds to step S22. Having proceeded to step S22, the CPU 11 of the operation support apparatus 10 detects information of the output timing (notification timing) and the output destination (notification destination) set in the output timing setting field (notification timing setting field) 51 of the timing/output destination setting section 50 and the output destination setting field (notification destination setting field) 53 from the setting information 15c stored in the HD 15.

Specifically, in the example illustrated in Fig. 19, "completion of welding" is detected as the output timing (notification timing), and the process management device 31 and the process management device 33 related to the "first" and "third" processes are detected as the output destination (notification destination).

Subsequently, in step S23, the CPU 11 of the operation support apparatus 10 detects the information of output method (notification method) set in the output method setting field (notification method setting field) 54 of the timing/output destination setting section 50 from the setting information 15c stored in the HD 15.

Specifically, in the example illustrated in Fig. 19, "screen (having a check)" which is setting for output (notification) via screen display and having a check by worker, and an output (notification) via "sound" are detected as the output method (notification method).

Subsequently, in step S24, the CPU 11 of the operation support apparatus 10 first detects the operating instruction information set in the operating instruction information setting field 47 from the setting information 15c stored in the HD 15, and then performs output processing (notification processing) of this operating instruction information based on the information of output timing (notification timing) and output destination (notification destination) detected in step S22, and the information of output method (notification method) detected in step S23. The CPU 11 performing this processing of step S24 forms a notification processing unit.

Specifically, in the example illustrated in Fig. 19, the operating instruction information is outputted (notified) to the process management device 31 and the process management device 33 at the timing "completion of welding" via the communication I/F 18 of the operation support apparatus 10. At this time, the operating instruction information is displayed on the display device 16 of the process management device 31 and the process management device 33, and sound related to the operating instruction information is outputted from the speakers 17 of the process management device 31 and the process management device 33.

Subsequently, in step S25, the CPU 11 of the operation support apparatus 10 determines whether or not there is setting of "having a check" requiring a check by worker in the information of output method (notification method) detected in step S23. As a result of this determination, when there is setting of "having a check" in the output method (notification method), the processing proceeds to step S26. In the example illustrated in Fig. 19, since the setting of "screen (having a check)" is made in the output method setting field (notification method setting field) 54, the processing proceeds to step S26.

Having proceeded to step S26, the CPU 11 of the operation support apparatus 10 determines whether information indicating that the operating instruction information is checked is received or not from the corresponding output destination (notification destination). Specifically, in the example illustrated in Fig. 19, it is determined whether the information indicating that the operating instruction information is checked is received or not from the process management device 31 and the process management device 33. As a result of this determination, when the information indicating that the operating instruction information is checked is not received from the relevant output destination (notification destination), the processing waits until it is determined that this information is received in step S26.

On the other hand, when it is determined that the information indicating that the operating instruction information is checked is received from the corresponding output destination (notification destination) in step S26, or when it is determined that there is no setting of "having a check" in the output method (notification method) in step S25, the processing of the flowchart illustrated in Fig. 20 is finished.

In the operation support apparatus 10 of this embodiment, the display items in the comparison expression 1 menu 63 which is a lower menu of this menu are changed and displayed depending on the item selected from the comparison target menu 62 (and the judging method menu 61). Thus, items which are subsequently selectable can be narrowed down dynamically and displayed. Accordingly, when inputting knowledges (rules) related to an operating instruction, this input operation is guided, making it possible to avoid limiting the operator who performs this input.

The components in Fig. 2 forming the operation support apparatus 10 according to this embodiment described above and the respective steps in Fig. 3, Fig. 4, and Fig. 20 illustrating the operation support method with the operation support apparatus 10 can be achieved by operation of a computer program, which is stored in a RAM, a ROM, and/or the like of a computer. This computer program and a computer readable recording medium recording this computer program are included in the present invention.

Specifically, the computer program is provided to a computer in the form of being recorded in a recording medium such as a CD-ROM for example, or via various types of transmission media. As the recording medium recording the computer program, it is possible to use a flexible disk, a hard disk, a magnetic tape, a magneto-optical disk, a non-volatile memory card, or the like besides the CD-ROM. On the other hand, as a transmission medium for the computer program, it is possible to use a communication medium in a computer network (LAN, WAN such as the Internet, a wireless communication network, or the like) system for supplying computer program information by propagation of a carrier wave. Further, as communication media of this type, there are wired line via an optical fiber or the like, wireless line, and the like.

Further, the function of the operation support apparatus 10 according to this embodiment is achieved not only by a computer executing the supplied computer program. When this computer program cooperates with the OS (operating system) operating on a computer, other application software, or the like to achieve the function of the operation support apparatus 10 according to this embodiment, such a computer program is included in the present invention. Further, when all or part of processing of the supplied computer program is performed by a function expansion board or a function expansion unit of the computer to achieve the function of the operation support apparatus 10 according to this embodiment, such a computer program is included in the present invention.

Further, the above-described embodiment merely illustrates, in its entirety, an example of implementing the present invention, and therefore the technical scope of the present invention should not be construed in any restrictive sense by the embodiment. That is, the invention may be embodied in various forms without departing from the spirit or essential characteristics thereof.

### Industrial Applicability

According to the present invention, depending on an item selected from a menu, display items of a lower menu below this menu are changed and displayed, and thus items which are subsequently selectable can be narrowed down dynamically and displayed. Accordingly, when inputting a knowledge (rule) related to an operating instruction, this input operation is guided, making it possible to avoid limiting the operator who performs this input.

## Claims

1. An operation support apparatus for giving an operating instruction to workers in production processes on a production line to support operations on the production line, the apparatus comprising:
a display unit displaying a setting screen including an operating instruction information setting section in which operating instruction information related to the operating instruction is set and an applicable condition setting section having a menu for setting an applicable condition when notifying the operating instruction information to the workers;
a selecting unit selecting one item from display items in the menu based on an operating input; and
a display control unit performing control to change and display display items in a lower menu below the menu depending on the item selected by the selecting unit.

2. The operation support apparatus according to claim 1,
wherein the applicable condition setting section is provided with an applicable condition setting field in which the applicable condition is set using one or more single setting items set with the menu and the lower menu,
the apparatus further comprising a setting unit setting the applicable condition based on a content of setting in the applicable condition setting field.

3. The operation support apparatus according to claim 1,
wherein the setting screen further includes a timing/notification destination setting section in which a timing and a notification destination when notifying the operating instruction information to the workers are set,
the apparatus further comprising a notification processing unit performing processing to notify the operating instruction information to the notification destination and at the timing which are set in the timing/notification destination setting section when an applicable condition set in the applicable condition setting section is satisfied.

4. The operation support apparatus according to claim 3,
wherein the setting screen is provided with a notification method setting field enabling setting of notification via display and sound at the notification destination as a method of the notification, and
wherein the notification processing unit performs processing to notify the operating instruction information at least via display or sound at the notification destination based on a content of setting in the notification method setting field.

5. The operation support apparatus according to claim 1,
wherein the setting screen is provided with a reference button for referring to an operating file related to an operation of each production process on the production line,
the apparatus further comprising an obtaining processing unit performing processing to obtain, when a predetermined operating file is specified by an operating input via the reference button, the predetermined operating file from an operating file storage unit storing the operating file.

6. The operation support apparatus according to claim 2,
wherein the setting unit stores information containing information related to the applicable condition as setting information in the setting information storage unit and sets the applicable condition.

7. An operation support method for giving an operating instruction to workers in production processes on a production line to support operations on the production line, the method comprising:
a display step of displaying on a display unit a setting screen including an operating instruction information setting section in which operating instruction information related to the operating instruction is set and an applicable condition setting section having a menu for setting an applicable condition when notifying the operating instruction information to the workers;
a selecting step of selecting one item from display items in the menu based on an operating input; and
a display control step of performing control to change and display display items in a lower menu below the menu depending on the item selected in the selecting step.

8. The operation support method according to claim 7,
wherein the applicable condition setting section is provided with an applicable condition setting field in which the applicable condition is set using one or more single setting items set with the menu and the lower menu,
the method further comprising a setting step of setting the applicable condition based on a content of setting in the applicable condition setting field.

9. The operation support method according to claim 7,
wherein the setting screen further includes a timing/notification destination setting section in which a timing and a notification destination when notifying the operating instruction information to the workers are set,
the method further comprising a notification processing step of performing processing to notify the operating instruction information to the notification destination and at the timing which are set in the timing/notification destination setting section when an applicable condition set in the applicable condition setting section is satisfied.

10. The operation support method according to claim 9,
wherein the setting screen is provided with a notification method setting field enabling setting of notification via display and sound at the notification destination as a method of the notification, and
wherein in the notification processing step, processing is performed to notify the operating instruction information at least via display or sound at the notification destination based on a content of setting in the notification method setting field.

11. The operation support method according to claim 7,
wherein the setting screen is provided with a reference button for referring to an operating file related to an operation of each production process on the production line,
the method further comprising an obtaining processing step of performing processing to obtain, when a predetermined operating file is specified by an operating input via the reference button, the predetermined operating file from an operating file storage unit storing the operating file.

12. The operation support method according to claim 8,
wherein in the setting step, information containing information related to the applicable condition is stored as setting information in the setting information storage unit and the applicable condition is set.

13. A computer program for causing a computer to execute an operation support method for giving an operating instruction to workers in production processes on a production line to support operations on the production line, the computer program causing a computer to execute:
a display step of displaying on a display unit a setting screen including an operating instruction information setting section in which operating instruction information related to the operating instruction is set and an applicable condition setting section having a menu for setting an applicable condition when notifying the operating instruction information to the workers;
a selecting step of selecting one item from display items in the menu based on an operating input; and
a display control step of performing control to change and display display items in a lower menu below the menu depending on the item selected in the selecting step.

14. The computer program according to claim 13, wherein the applicable condition setting section is provided with an applicable condition setting field in which the applicable condition is set using one or more single setting items set with the menu and the lower menu,
the computer program further comprising a setting step of setting the applicable condition based on a content of setting in the applicable condition setting field.

15. The computer program according to claim 13, wherein the setting screen further includes a timing/notification destination setting section in which a timing and a notification destination when notifying the operating instruction information to the workers are set,
the computer program further comprising a notification processing step of performing processing to notify the operating instruction information to the notification destination and at the timing which are set in the timing/notification destination setting section when an applicable condition set in the applicable condition setting section is satisfied.

16. The computer program according to claim 15, wherein the setting screen is provided with a notification method setting field enabling setting of notification via display and sound at the notification destination as a method of the notification, and
wherein in the notification processing step, processing is performed to notify the operating instruction information at least via display or sound at the notification destination based on a content of setting in the notification method setting field.

17. The computer program according to claim 13, wherein the setting screen is provided with a reference button for referring to an operating file related to an operation of each production process on the production line,
the computer program further comprising an obtaining processing step of performing processing to obtain, when a predetermined operating file is specified by an operating input via the reference button, the predetermined operating file from an operating file storage unit storing the operating file.

18. The computer program according to claim 14,
wherein in the setting step, information containing information related to the applicable condition is stored as setting information in the setting information storage unit and the applicable condition is set.
